# EUROPEAN PATENT SPECIFICATION

(11) **EP 1 629 465 B1**
(45) Date of publication and mention of the grant of the patent: **14.05.2008**
(21) Application number: 04732695.4
(22) Date of filing: 13.05.2004
(51) Int. Cl.: G11B 7/00, G11B 7/007, G11B 7/24

(54) **OPTICAL DISC**
OPTISCHE AUFZEICHNUNGSPLATTE
DISQUE OPTIQUE

(30) Priority: 20.05.2003 EP 03101435
(43) Date of publication of application: 01.03.2006
(73) Proprietor: Koninklijke Philips Electronics N.V., 5621 BA Eindhoven (NL)
(72) Inventor: BRONDIJK, Robert, A., NL-5656 AA Eindhoven (NL)
(74) Representative: Bekkers, Joost J.J
(86) International application number: PCT/IB2004/050673
(87) International publication number: WO 2004/104996

(56) References cited:
- EP-A- 0 545 532
- EP-A- 0 996 124
- EP-A- 0 997 892
- GB-A- 2 349 501
- US-A- 5 862 117

## Description

### FIELD OF THE INVENTION

The present invention relates to an optical storage disc.

### BACKGROUND OF THE INVENTION

As is commonly known, an optical storage disc comprises at least one track, either in the form of a continuous spiral or in the form of multiple concentric circles, of storage space where information may be stored in the form of a data pattern. Optical discs may be read-only type, where information is recorded during manufacturing, which information can only be read by a user. The optical storage disc may also be a writable type, where information may be stored by a user. One such type is DVD (Digital Versatile Disc), and the present invention relates particularly to DVD discs, for which reason the present invention will be explained in the following for DVD type discs. However, the gist of the present invention is also applicable to other types of recordable discs, therefore the following description is not to be understood as limiting the scope of the present invention to DVD discs only.

Since the technology of optical discs in general and DVD in particular, the way in which information can be stored in an optical disc, and the way in which optical data can be read from an optical disc, is commonly known, it is not necessary here to describe this technology in more detail. However, it is important to realise that storage locations have addresses.

Information is written to disc in several sessions. Each session may contain one or more tracks, each track containing one or more sequentially written blocks. Tracks can be open, closed, or invisible; this distinction is indicated as track state.
A "closed" track means that the length of the track is known and that the track is completely filled with data.
An "open" track means that the length of the track is known but the track is not yet completely filled with data.
An "invisible" track means that the length of the track is yet unknown.

Likewise, sessions can be open or closed; this distinction is indicated as session state.
A "closed" session means that the length of the session is known and that all tracks in this session are closed.
An "open" session means that the length of the session is unknown, and that the session comprises one or more "open" and/or "invisible" tracks.

Each session starts with a part called "session lead-in", which contains information relating to the session state and a summary of the track states of the tracks of that session.

The disc as a whole has a "disc lead-in", which contains multi-session information, i.e. information relating to the session states of all sessions. However, the disc lead-in does not contain any information relating to the track states.

The information on session states and track states in the disc lead-in and in the session lead-in is important for disc drive apparatus for reading or writing a disc. In this context, it is important to distinguish between disc drive apparatus capable of writing a disc (and also reading) on the one hand, and disc drive apparatus only capable of reading a disc; the latter will be termed "reader" while the former will be termed "writer".

EP0996124A1 discloses an optical disk and recording/reproduction apparatus using the same in which an optical recording disk is intended only for the reproduction of a main information and used by an information management system. It has the attachment of a memory in which data for the management of the main information is written and read out easily and reliably. The memory has associated electromagnetic coupling means for transacting the record management data with and receiving power from a recording/ reproduction apparatus. The electromagnetic coupling means is built in the memory or disposed in an annular or spiral form on the disk. The transmission frequency band for data transaction and power supply is set outside the main information reproduction frequency band. The memory is disposed in or on an appropriate plastic layer of the disk depending on the usage of the disk, and located in the inner or outer section of the recording medium forming area on the disk depending on the transmission band. This low-cost optical disk can be manufactured at a high reliability and high yield.

EP0997892A1 discloses a recording disc in which information can be renewed by signals, such as electromagnetic waves, and further with which unnecessary vibration due to an eccentricity in center of gravity of the disc can be reduced when the disc is rotated at high rotation velocity, wherein there are positioned an antenna portion which enables to receive information and/or electric power on the disc, and a memory chip(s) for transmitting the information received to the disc and for renewing that information. Further, for reducing the eccentricity in center of gravity of the disc, a counter balance and/or a label portion and/or the antenna portion and/or an other memory chip(s) and/or a battery are positioned so that they are in balance to the memory chip(s) on the disc.

EP0545532A1 **discloses a computer system utilizing compact intelligent** disks comprising a removable optical disk having active circuitry thereon and a disk player. The optical disk includes a storage medium for storing data on one side and active circuitry for processing the data on the other side. The disk cartridge includes most of the high speed components of the computer system, while the disk player includes those components which are least likely to change over time. By combining the active circuitry with the data and programs to be processed thereby on a single disk cartridge, the problems associated with maintaining and configuring the system are **substantially reduced.**

GB2349501A **discloses an optical recording medium structure having a** memory chip. The optical recording medium structure is arranged with a memory chip and an antenna structure. The memory chip is used to record information related to manufacturer, seller and protective key required by users. The information stored in the memory chip can be transmitted to an external reader through the antenna structure.

US5862117 **discloses a compact disc comprising a data storage medium** for optical reading situated in an annular region, which defines a central region wherein is arranged an electronic module, formed of an electronic unit, in particular an integrated circuit, and an antenna formed by a winding, made of an electrically **conductive material. The electronic module allows contactless electromagnetic coupling** with an electromagnetic wave transmitter-receiver able to communicate with said electronic unit. In particular, this electronic unit comprises an identification code and/or a decoding key for the data contained in said storage medium.

When a portion of the storage track of a DVD disc contains user information written therein, this information is accompanied by address information and position information so that the information can be accessed. When a reader is trying to find specific user information, it needs to know the addresses of the specific user information, as well as the position information such as track and sector. Specifically, such reader needs to know the starting addresses of the sessions, and it needs to know the session states. A problem in this respect is that a reader is not capable of reading the session information in the disc lead-in, because this information is surrounded by unwritten areas which are inaccessible to readers. Thus, a reader needs to jump from session to session (session hopping) to read the session information in each session lead-in. A writer does not have these problems, because a writer is capable of reading the summary of the session information in the disc lead-in. However, when a writer receives a command to start writing information, it needs to know where it should begin, and to this end it needs to know the state of the last session. If the last session is a closed session, the summary of the session information in the disc lead-in suffices. However, in many cases the last session is an open session, in which case the writer needs to know the last address of each open or invisible track. Since these addresses are specified nowhere, the writer needs to jump from track to track (track hopping) to find the required information.

Such hopping procedures may take in the order of one second per jump. Whenever a jump ends in an unwritten area, the DVD drive apparatus will have no position information at all, and it needs to perform a recovery operation to find a written area again; such recovery operation may take multiple seconds. In other words, a session hopping procedure for gathering session information or a track hopping procedure for gathering track information can take a very long time.

Further, during such hopping procedures, address information must be read and interpreted. A writer is capable of reading address information from the wobble coding, but a reader is only capable of reading address information as incorporated in the data written. In the reading process, errors may occur, and it depends on the robustness of the format whether or not the process succeeds.

One possible way of overcoming part of these problems is to provide a reader apparatus with an OPU and associated electronic circuitry to read the wobble address information. However, this is relatively expensive.

Thus, it is a general objective of the present invention to provide an economical way to overcome or at least alleviate the above-mentioned problems.

### SUMMARY OF THE INVENTION

In order to overcome the above-mentioned problems, the present invention provides an optical disc provided with a memory chip mounted thereon, the memory chip containing session information.

Further, the present invention provides an optical disc drive apparatus for reading optical information from optical discs, the optical disc drive apparatus being capable of reading session information from said memory chip and using this information when accessing the optical disc.

Further, the present invention provides an optical disc drive apparatus for writing optical information into optical discs, the optical disc drive apparatus being capable of reading session information from said memory chip and using this information when accessing the optical disc, the optical disc drive apparatus being capable of storing session information into said memory chip after having performed a write operation. In order to assure the data integrity of written sessions, discs comprising such memory chip are preferably made inaccessible to prior art writers who do not have the capability of reading and writing such memory chip. This can for instance be achieved by setting the booktype byte in the wobble at a suitable value.

### BRIEF DESCRIPTION OF THE DRAWINGS

These and other aspects, features and advantages of the present invention will be further explained by the following description taken with reference to the drawings, in which same reference numerals indicate same or similar parts, and in which:
Figure 1 schematically illustrates an optical disc drive;
Figure 2 schematically illustrates session layout on a track of a DVD;
Figure 3 is a flow chart schematically illustrating a read operation of an optical disc drive in accordance with the present invention;
Figure 4 is a flow chart schematically illustrating a write operation of an optical disc drive in accordance with the present invention.

### DESCRIPTION OF THE INVENTION

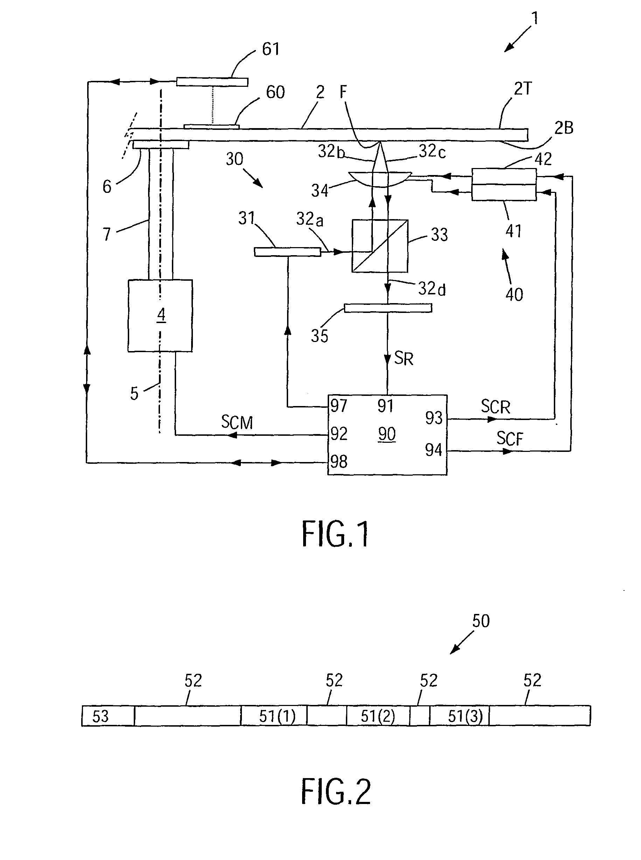

Figure 1 schematically illustrates an optical disc drive apparatus 1, suitable for storing information on or reading information from an optical disc 2, typically a DVD. For rotating the disc 2, the disc drive apparatus 1 comprises a motor 4 fixed to a frame (not shown for sake of simplicity), defining a rotation axis 5. For receiving and holding the disc 2, the disc drive apparatus 1 may comprise a turntable or clamping hub 6, which in the case of a spindle motor 4 is mounted on the spindle axle 7 of the motor 4.

The disc 2 has two main surfaces 2B and 2T; in the following, the first main surface 2B will also be referred to as bottom surface while the second main surface 2T will also be referred to as top surface.

The disc drive apparatus 1 further comprises an optical system 30 for scanning tracks (not shown) of the disc 2 by an optical beam. More specifically, the optical system 30 comprises a light beam generating means 31, typically a laser such as a laser diode, which is arranged to generate a light beam 32a which passes a beam splitter 33 and an objective lens 34. The objective lens 34 focuses the light beam 32b into a focal spot F on the disc 2. The light beam 32b reflects from the disc 2 (reflected light beam 32c) and passes the objective lens 34 and the beam splitter 33 (beam 32d) to reach an optical detector 35.

It is noted that, in figure 1, the focal spot F is shown on the bottom surface 2B of the disc 2, for sake of simplicity, because the optical system 30 is shown at the bottom surface side of disc 2. In reality, the focal spot F lies somewhat deeper in the disc 2, on a storage layer not shown, as will be clear to a person skilled in the art.

The disc drive apparatus 1 further comprises an actuator system 40 for bringing the optical lens 34 to a desired track and for correctly following such track. Particularly, the disc drive apparatus 1 comprises a radial actuator 41 for radially displacing the objective lens 34 with respect to the disc 2. Since radial actuators are known per se, while the present invention does not relate to the design and functioning of such radial actuator, it is not necessary here to discuss the design and functioning of a radial actuator in great detail.

For achieving and maintaining a correct focusing of the light beam 32b, exactly on the desired location of the disc 2, said objective lens 34 is mounted axially displaceable, while further the disc drive apparatus 1 also comprises a focal actuator 42 arranged for axially displacing the objective lens 34 with respect to the disc 2. Since axial actuators are known per se, while further the design and operation of such axial actuator is no subject of the present invention, it is not necessary here to discuss the design and operation of such focal actuator in great detail.

It is noted that means for supporting the objective lens with respect to an apparatus frame, and means for axially and radially displacing the objective lens, are generally known per se. Since the design and operation of such supporting and displacing means are no subject of the present invention, it is not necessary here to discuss their design and operation in great detail. The same applies to means for pivoting the objective lens.

It is further noted that the radial actuator 41 and focal actuator 42 may be implemented as one integrated actuator.

The disc drive apparatus 1 further comprises a control circuit 90 having a first output 92 connected to a control input of the motor 4, having a second output 93 coupled to a control input of the radial actuator 41, and having a third output 94 coupled to a control input of the focal actuator 42. The control circuit 90 is designed to generate at its first output 92 a control signal S_{CM} for controlling the motor 4, to generate at its second control output 93 a control signal S_{CR} for controlling the radial actuator 41, and to generate at its third output 94 a control signal S_{CF} for controlling the focal actuator 42.

The control circuit 90 further has a read signal input 91 for receiving a read signal S_{R} from the optical detector 35, and a data output 97 coupled to the laser 31 for controlling its operation.

Thus, as will be clear to a person skilled in the art, and as already known in the state of the art, the control circuit 90 is capable of reading optical information from the disc 2 by suitably controlling the motor 4, laser 31, and actuators 41, 42 and suitably processing the read signal S_{R} from the optical detector 35, while further the control circuit 90 is capable of writing optical information to the disc 2 by suitably controlling the motor 4, laser 31, and actuators 41, 42.

Figure 2 illustrates a track 50 of the disc 2 as a continuous ribbon. The track 50 comprises track portions 51 where information has been written, also indicated as sessions, individually referenced by a numeral between brackets. Non-written parts of the track, i.e. blank track portions, are indicated at 52. It can be seen that subsequent sessions 51 (i) and 51 (i+1) are separated by a blank track portion 52. At the beginning of the track 50, a lead-in portion 53 is shown, which contains session information, i.e. information relating to length and position of the sessions 51.

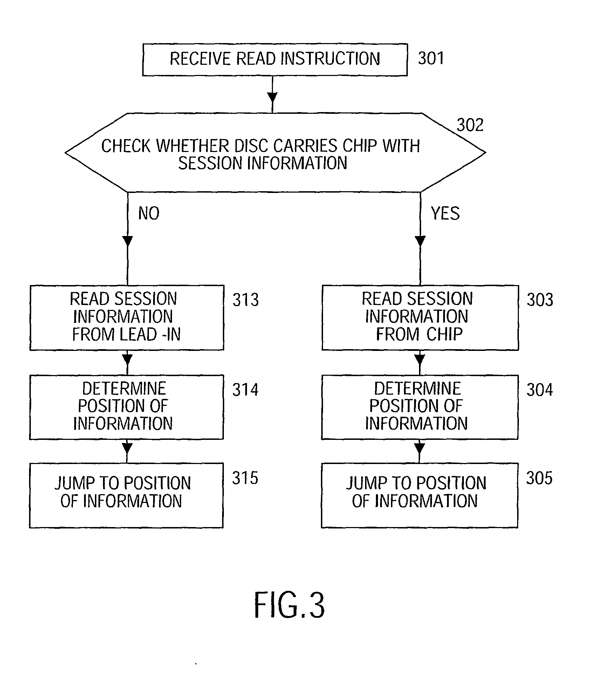

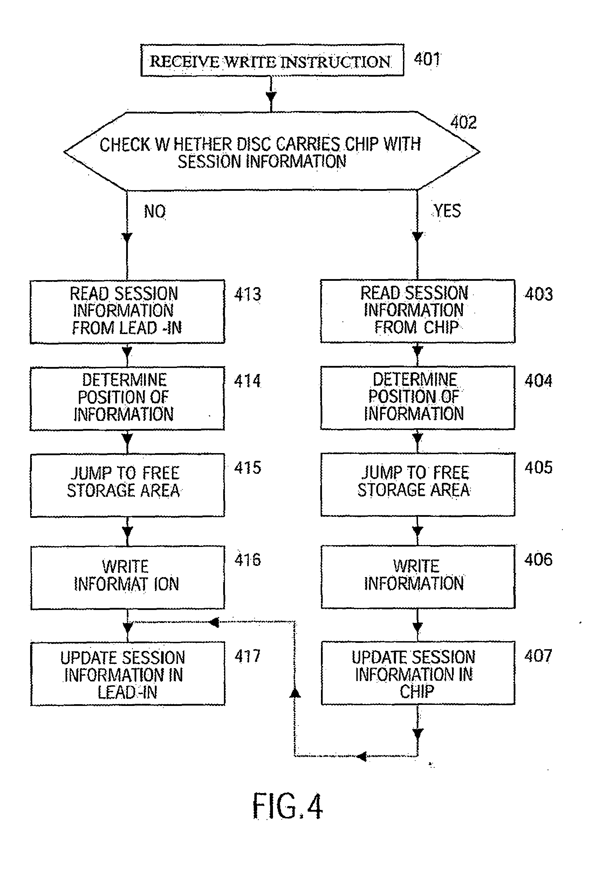

With reference to figures 3 and 4, the operation of disc drive 1 in accordance with the present invention will be explained.

The disc drive 1 is capable of handling prior art discs, i.e. discs without any memory chip. For handling such discs, the control circuit 90 is designed to consult and/or update the session information in the lead-in 53 before and/or after an access to the disc.

More particularly, when the control circuit 90 receives a user instruction [step 301] to read a specific piece of information, the control circuit 90 consults [step 313] the session information in lead-in 53 to find the session lay-out, determines [step 314] the position where the required information is to be found, and then jumps [step 315] to this location.

On the other hand, when the control circuit 90 receives [step 401] a user instruction to write a specific piece of information, the control circuit 90 consults [step 413] the session information in lead-in 53 to find the session lay-out, determines [step 414] a free track portion where writing may take place, and jumps [step 415] to a position at the beginning of this track portion. Then, the control circuit 90 writes [step 416] the information in a new session. After the control circuit 90 has completed the new session, the control circuit 90 writes [step 417] updated session information into the lead-in. The session information can be updated directly after completing the session or when the disc is taken out of the disc drive, i.e. possibly after multiple sessions have been completed. It is noted that such performance is known to a person skilled in the art and needs not be described in more detail here.

According to an important aspect of the present invention, the disc 2 carries a memory chip 60 fixedly mounted on the disc 2 or inside the disc material. Although the chip 60 may be mounted at the bottom surface 2B, the chip 60 is preferably mounted at the top surface 2T, i.e. directed away from the optical system 30, as illustrated. Although the chip 60 may be mounted close to the outer diameter of the disc 2, the chip 60 is preferably mounted close to the rotational axis 5, as illustrated.

For communicating with this chip 60, the disc drive 1 comprises a chip reader/writer device 61, coupled to an input/output port 98 of the control circuit 90. The chip reader/writer device 61 is adapted to send a signal to the chip 60 or receive a signal from the chip 60, preferably without contact, typically through RF transmission. Through the chip reader/writer device 61, the control circuit 90 is capable of storing information into the chip 60 and reading information from the chip 60.

It is noted that the technology of making a memory chip, writing information into a memory chip without physical contact being necessary, and reading information from a memory chip without physical contact being necessary, is known per se. Since the present invention does not relate to said technology as such, while further the existing technology can be used when implementing the present invention, it is not necessary here to discuss this technology in great detail.

According to a further important aspect of the present invention, the memory chip 60 contains session information.

The disc drive 1, when handling discs which do carry a memory chip 60, has a choice to consult and/or update the session information in the lead-in 53 or to consult and/or update the session information in the memory chip 60. Particularly, in accordance with the present invention, the control circuit 90 is designed to consult and/or update the session information in the memory chip 60 before and/or after an access to the disc, in a similar manner as described above with respect to the lead-in.

More particularly, when the control circuit 90 receives [step 301] a user instruction to read a specific piece of information, the control circuit 90 consults [step 303] the session information in memory chip 60 to find the session lay-out, determines [step 304] the position where the required information is to be found, and then jumps [step 305] to this location.

The control circuit 90 may continue from step 301 to step 303 immediately. It is also possible that the control circuit 90 continues from step 301 to step 303 only if the control circuit 90 is not capable of reading the lead-in for any reason, and to otherwise proceed with step 313.

Alternatively, as illustrated in figure 3, it is also possible that the control circuit 90 first checks [step 302] whether the disc 2 carries a memory chip 60 with session information, and if so, it is possible that the control circuit 90 does not even attempt to consult the lead-in but consults the memory chip 60 instead of consulting the lead-in. If the control circuit 90, in step 302, finds that the disc 2 does not carry such memory chip 60, it continues with consulting the lead-in 53 [steps 313-315].

On the other hand, when the control circuit 90 receives [step 401] a user instruction to write a specific piece of information, the control circuit 90 consults [step 403] the session information in memory chip 60 to find the session lay-out, determines [step 404] a free track portion where writing may take place, and jumps [step 405] to a position at the beginning of this track portion. Then, the control circuit 90 writes [step 406] the information in a new session. After the control circuit 90 has completed the new session, the control circuit 90 writes [step 407] updated session information into the memory chip 60. The session information can be updated directly after completing the session or when the disc is taken out of the disc drive, i.e. possibly after multiple sessions have been completed. In this respect, the performance is similar to the prior art performance where the session information is written in the lead-in, so that it is not necessary here to describe this performance in more detail.

The control circuit 90 may continue from step 401 to step 403 immediately. It is also possible that the control circuit 90 continues from step 401 to step 403 only if the control circuit 90 is not capable of reading the lead-in for any reason, and to otherwise proceed with step 413.

Alternatively, as illustrated in figure 4, it is also possible that the control circuit 90 first checks [step 402] whether the disc 2 carries a memory chip 60 with session information, and if so, it is possible that the control circuit 90, before the writing operation, does not even attempt to consult the lead-in but consults the memory chip 60 instead of consulting the lead-in. If the control circuit 90, in step 402, finds that the disc 2 does not carry such memory chip 60, it continues with consulting the lead-in 53 [steps 413-417].
After the writing operation, it is possible that the control circuit 90 writes updated session information into the memory chip 60 only [step 407]. However, it is preferred that the control circuit 90 writes updated session information into the memory chip 60 [step 407] as well as into the lead-in 53 [step 417], as indicated by the dotted line.

It should be clear to a person skilled in the art that the present invention is not limited to the exemplary embodiments discussed above, but that various variations and modifications are possible within the protective scope of the invention as defined in the appending claims.

For instance, it is possible that the memory chip contains additional information apart from the session information.

Further, it is possible that the session information is only stored in the chip, not in the lead-in. In that case, the control circuit 90 only consults the chip 60, not the lead-in.

It is possible that the information stored in the memory chip 60 is the same as the information stored in the lead-in. However, the present invention allows more information to be stored in the memory chip 60. For instance, it is possible to store (and update) track state information into the memory chip 60. Also, it is very advantageous to store a de-ice table into the memory chip 60; in this case, writing a recordable (write-once; R-type) disc is no longer limited to a sequential write model but a random write access model is made available.

## Claims

1. Optical disc (2) suitable for optically storing information in multiple sessions (51) and storing related session information, the optical disc (2) having a memory chip (60) and being **characterized in that** said memory chip (60) is containing said session information stored therein.

2. Optical disc according to claim 1, the disc having at least one track (50) for storing information, a lead-in portion (53) of the track also containing session information recorded therein.

3. Optical disc drive apparatus (1) for reading optical information from an optical disc (2) according to any of claims 1-2, the optical disc drive apparatus being adapted for reading session information from said memory chip (60) and using this information when accessing the optical disc.

4. Optical disc drive apparatus according to claim 3, comprising:
- means (4, 6) for receiving and rotating an optical disc;
- an optical system (30) and an actuator system (40), controlled by a control circuit (90), for scanning tracks (50) of the disc (2) using an optical beam (32) for reading information from said track;
- a chip reader/writer device (61), coupled to an input/output port (98) of the control circuit (90), adapted for communication with said chip (60) of the disc (2);
wherein the control circuit (90) is adapted, in response to a read command, to read session information from said chip (60).

5. Optical disc drive apparatus according to claim 4, the optical disc drive apparatus being adapted for performing an information reading method comprising the following steps:
- receiving [step 301] a user instruction to read a specific piece of information;
- consulting [step 303] the session information in memory chip (60);
- determining [step 304] the position where the required information is to be found;
- jumping [step 305] to the determined position.

6. Optical disc drive apparatus according to claim 5, wherein the optical disc drive apparatus is adapted, after the user instruction is received to first check [step 302] whether the disc (2) carries a memory chip (60) with session information; and wherein the optical disc drive apparatus is adapted, when the disc (2) does carry a memory chip (60) with session information, to continue with
- consulting [step 303] the session information in memory chip (60);
- determining [step 304] the position where the required information is to be found;
- jumping [step 305] to the determined position.

7. Optical disc drive apparatus for writing optical information into an optical disc (2) according to any of claims 1-2, the optical disc drive apparatus being capable of reading session information from said memory chip and using this information when accessing the optical disc, the optical disc drive apparatus being adapted to store session information into said memory chip after having performed a write operation.

8. Optical disc drive apparatus according to claim 7, comprising:
- means (4, 6) for receiving and rotating an optical disc;
- an optical system (30) and an actuator system (40), controlled by a control circuit (90), for scanning tracks (50) of the disc (2) using an optical beam (32) for writing information into said track or for reading information from said track;
- a chip reader/writer device (61), coupled to an input/output port (98) of the control circuit (90), adapted for communication with said chip (60) of the disc (2);
wherein the control circuit (90) is adapted, in response to a write command, to read session information from said chip (60).

9. Optical disc drive apparatus according to claim 8, the optical disc drive apparatus being adapted for performing an information writing method comprising the following steps:
- receiving [step 304] a user instruction to read a specific piece of information;
- consulting [step 403] the session information in memory chip (60); determining [step 404] a free track portion where writing may take place;
- jumping [step 405] to a position at the beginning of the determined free track portion ;
- writing [step 406] the information in a new session; after having completed the new session, writing [step 407] updated session information into the memory chip 60.

10. Optical disc drive apparatus according to claim 9, wherein the optical disc drive apparatus is adapted, after receiving a write instruction [step 401], to first check [step 402] whether the disc (2) carries a memory chip (60) with session information;
and wherein the optical disc drive apparatus is adapted, when the disc (2) does carry a memory chip (60) with session information, to continue with
- consulting [step 403] the session information in memory chip (60); determining [step 404] a free track portion where writing may take place;
- jumping [step 405] to a position at the beginning of the determined free track portion;
- writing [step 406] the information in a new session;
after having completed the new session, writing [step 407] updated session information into the memory chip 60.

11. Optical disc drive apparatus according to claim 7, capable of performing a random write operation on a recordable optical disc (R-type).

## Patentansprüche

1. Optische Platte (2), die zum optischen Speichern von Informationen in mehreren Sitzungen (51) und Speichern zugehöriger Sitzungsinformationen geeignet ist,
wobei die optische Platte (2) einen Speicherchip (60) aufweist und **dadurch gekennzeichnet ist, dass** der Speicherchip (60) die Sitzungsinformationen enthält, die in ihm gespeichert sind.

2. Optische Platte nach Anspruch 1, wobei die Platte mindestens eine Spur (50) zum Speichern von Informationen aufweist, wobei ein Lead-in-Abschnitt (53) der Spur ebenfalls Sitzungsinformationen enthält, die in ihm aufgezeichnet sind.

3. Optisches Plattenlaufwerk (1) zum Lesen optischer Informationen von einer optischen Platte (2) nach einem der Ansprüche 1-2, wobei das optische Plattenlaufwerk dazu eingerichtet ist, Sitzungsinformationen aus dem Speicherchip (60) zu lesen und diese Informationen beim Zugreifen auf die optische Platte zu verwenden.

4. Optisches Plattenlaufwerk nach Anspruch 3, welches umfasst:
- Mittel (4, 6) zum Aufnehmen einer optischen Platte und zum Versetzen derselben in Rotation;
- ein optisches System (30) und ein Aktorsystem (40), das von einer Steuerschaltung (90) gesteuert wird, zum Abtasten von Spuren (50) der Platte (2) unter Verwendung eines optischen Strahls (32) zum Lesen von Informationen aus der Spur;
- eine Chip-Lese-/Schreibeinrichtung (61), die mit einem Ein-/Ausgangsanschluss (98) der Steuerschaltung (90) gekoppelt ist und für eine Kommunikation mit dem Chip (60) der Platte (2) eingerichtet ist;
wobei die Steuerschaltung (90) dazu eingerichtet ist, in Reaktion auf einen Lesebefehl Sitzungsinformationen aus dem Chip (60) zu lesen.

5. Optisches Plattenlaufwerk nach Anspruch 4, wobei das optische Plattenlaufwerk dazu eingerichtet ist, ein Verfahren zum Lesen von Informationen auszuführen, das die folgenden Schritte umfasst:
- Empfangen [Schritt 301] einer Benutzeranweisung, ein spezielles Stück Information zu lesen;
- Konsultieren [Schritt 303] der Sitzungsinformationen im Speicherchip (60);
- Bestimmen [Schritt 304] der Position, wo die geforderte Information zu finden ist;
- Springen [Schritt 305] zu der bestimmten Position.

6. Optisches Plattenlaufwerk nach Anspruch 5, wobei das optische Plattenlaufwerk dazu eingerichtet ist, nachdem die Benutzeranweisung empfangen worden ist, zuerst zu prüfen [Schritt 302], ob die Platte (2) einen Speicherchip (60) mit Sitzungsinformationen trägt;
und wobei das optische Plattenlaufwerk dazu eingerichtet ist, wenn die Platte (2) einen Speicherchip (60) mit Sitzungsinformationen trägt, wie folgt fortzufahren:
- Konsultieren [Schritt 303] der Sitzungsinformationen im Speicherchip (60);
- Bestimmen [Schritt 304] der Position, wo die geforderte Information zu finden ist;
- Springen [Schritt 305] zu der bestimmten Position.

7. Optisches Plattenlaufwerk zum Schreiben optischer Informationen auf einer optischen Platte (2) nach einem der Ansprüche 1-2, wobei das optische Plattenlaufwerk dazu eingerichtet ist, Sitzungsinformationen aus dem Speicherchip zu lesen und diese Informationen beim Zugreifen auf die optische Platte zu verwenden, wobei das optische Plattenlaufwerk dazu eingerichtet ist, Sitzungsinformationen in dem Speicherchip zu speichern, nachdem es einen Schreibvorgang ausgeführt hat.

8. Optisches Plattenlaufwerk nach Anspruch 7, welches umfasst:
- Mittel (4, 6) zum Aufnehmen einer optischen Platte und zum Versetzen derselben in Rotation;
- ein optisches System (30) und ein Aktorsystem (40), das von einer Steuerschaltung (90) gesteuert wird, zum Abtasten von Spuren (50) der Platte (2) unter Verwendung eines optischen Strahls (32) zum Schreiben von Informationen in die Spur und zum Lesen von Informationen aus der Spur;
- eine Chip-Lese-/Schreibeinrichtung (61), die mit einem Ein-/Ausgangsanschluss (98) der Steuerschaltung (90) gekoppelt ist und für eine Kommunikation mit dem Chip (60) der Platte (2) eingerichtet ist;
wobei die Steuerschaltung (90) dazu eingerichtet ist, in Reaktion auf einen Schreibbefehl Sitzungsinformationen aus dem Chip (60) zu lesen.

9. Optisches Plattenlaufwerk nach Anspruch 8, wobei das optische Plattenlaufwerk dazu eingerichtet ist, ein Verfahren zum Schreiben von Informationen auszuführen, das die folgenden Schritte umfasst:
- Empfangen [Schritt 304] einer Benutzeranweisung, ein spezielles Stück Information zu lesen;
- Konsultieren [Schritt 403] der Sitzungsinformationen im Speicherchip (60);
- Bestimmen [Schritt 404] eines freien Spurabschnittes, wo ein Schreiben stattfinden kann;
- Springen [Schritt 405] zu einer Position am Anfang des bestimmten freien Spurabschnittes;
- Schreiben [Schritt 406] der Information in einer neuen Sitzung;
nachdem die neue Sitzung beendet worden ist, Schreiben [Schritt 407] aktualisierter Sitzungsinformationen in den Speicherchip (60).

10. Optisches Plattenlaufwerk nach Anspruch 9, wobei das optische Plattenlaufwerk dazu eingerichtet ist, nach dem Empfangen einer Schreibanweisung zuerst zu prüfen [Schritt 402], ob die Platte (2) einen Speicherchip (60) mit Sitzungsinformationen trägt;
und wobei das optische Plattenlaufwerk dazu eingerichtet ist, wenn die Platte (2) einen Speicherchip (60) mit Sitzungsinformationen trägt, wie folgt fortzufahren:
- Konsultieren [Schritt 403] der Sitzungsinformationen im Speicherchip (60);
- Bestimmen [Schritt 404] eines freien Spurabschnittes, wo ein Schreiben stattfinden kann;
- Springen [Schritt 405] zu einer Position am Anfang des bestimmten freien Spurabschnittes;
- Schreiben [Schritt 406] der Information in einer neuen Sitzung;
nachdem die neue Sitzung beendet worden ist, Schreiben [Schritt 407] aktualisierter Sitzungsinformationen in den Speicherchip (60).

11. Optisches Plattenlaufwerk nach Anspruch 7, das in der Lage ist, einen zufälligen Schreibvorgang auf einer beschreibbaren optischen Platte (R-Typ) auszuführen.

## Revendications

1. Disque optique (2) approprié pour stocker de façon optique des informations dans plusieurs sessions (51) et de stocker des informations de session relatives, le disque optique (2) étant muni d'une puce mémoire (60) et étant **caractérisé en ce que** ladite puce mémoire (60) contient lesdites informations de session qui y sont stockées.

2. Disque optique selon la revendication 1, le disque comprenant au moins une piste (50) pour stocker des informations, une portion d'amorce (53) de la piste contenant également des informations de session qui y sont enregistrées.

3. Appareil d'entrainement de disque optique (1) permettant de lire des informations optiques à partir d'un disque optique (2) selon l'une quelconque des revendications 1-2, l'appareil d'entrainement de disque optique étant aménagé pour lire des informations de session de ladite puce mémoire (60) et utiliser ces informations lors d'un accès au disque optique.

4. Appareil d'entrainement de disque optique selon la revendication 3, comprenant:
- des moyens (4, 6) pour recevoir et faire tourner un disque optique;
- un système optique (30) et un système actionneur (40), commandés par un circuit de commande (90), pour balayer des pistes (50) du disque (2) en utilisant un faisceau optique (32) pour lire des informations à partir de ladite piste;
- un dispositif de lecture/écriture de puce (61), couplé à un port
d'entrée/sortie (98) du circuit de commande (90), aménagé pour une communication avec ladite puce (60) du disque (2);
dans lequel le circuit de commande (90) est aménagé, en réponse à une commande de lecture, pour lire des informations de session de ladite puce (60).

5. Appareil d'entrainement de disque optique selon la revendication 4, l'appareil d'entrainement de disque optique étant aménagé pour réaliser un procédé de lecture d'informations comprenant les étapes suivantes:
- réception [étape 301] d'une instruction d'utilisateur de lecture d'une partie spécifique d'information;
- consultation [étape 303] des informations de session dans la puce mémoire (60);
- détermination [étape 304] de la position à laquelle les informations requises doivent être trouvées;
- saut [étape 305] à la position déterminée.

6. Appareil d'entrainement de disque optique selon la revendication 5, dans lequel l'appareil d'entrainement de disque optique est aménagé, après que l'instruction d'utilisateur ait été reçue, pour d'abord vérifier [étape 302] si le disque (2) comporte ou non une puce mémoire (60) avec des informations de session; et dans lequel l'appareil d'entrainement de disque optique est aménagé, quand le disque (2) ne comporte pas de puce mémoire (60) avec des informations de session, pour continuer avec les étapes suivantes:
- consultation [étape 303] des informations de session de la puce mémoire (60);
- détermination [étape 304] de la position à laquelle les informations requises doivent être trouvées;
- saut [étape 305] à la position déterminée.

7. Appareil d'entrainement de disque optique permettant d'écrire des informations optiques sur un disque optique (2) selon l'une quelconque des revendications 1-2, l'appareil d'entrainement de disque optique étant capable de lire des informations de session à partir de ladite puce mémoire et d'utiliser ces informations lors d'un accès au disque optique, l'appareil d'entrainement de disque optique étant aménagé pour stocker des informations de session dans ladite puce mémoire après avoir réalisé une opération d'écriture.

8. Appareil d'entrainement de disque optique selon la revendication 7, comprenant:
- des moyens (4, 6) pour recevoir et faire tourner un disque optique;
- un système optique (30) et un système actionneur (40), commandés par un circuit de commande (90), pour balayer des pistes (50) du disque (2) en utilisant un faisceau optique (32) pour écrire des informations sur ladite piste ou pour lire des informations à partir de ladite piste;
- un dispositif de lecture/écriture de puce (61), couplé à un port
d'entrée/sortie (98) du circuit de commande (90), aménagé pour une communication avec ladite puce (60) du disque (2);
dans lequel le circuit de commande (90) est aménagé, en réponse à une commande d'écriture, pour lire des informations de session de ladite puce (60).

9. Appareil d'entrainement de disque optique selon la revendication 8, l'appareil d'entrainement de disque optique étant aménagé pour réaliser un procédé d'écriture d'informations comprenant les étapes suivantes:
- réception [étape 304] d'une instruction d'utilisateur de lecture d'une partie spécifique d'information;
- consultation [étape 403] des informations de session dans la puce mémoire (60);
- détermination [étape 404] d'une portion de piste libre sur laquelle une écriture peut avoir lieu;
- saut [étape 405] à une position au début de la portion de piste libre déterminée;
- écriture [étape 406] des informations dans une nouvelle session;
- après avoir complété la nouvelle session, écriture [étape 407] d'informations de session mises à jour dans la puce mémoire 60.

10. Appareil d'entrainement de disque optique selon la revendication 9, dans lequel l'appareil d'entrainement de disque optique est aménagé, après avoir reçu une instruction d'écriture [étape 401], pour d'abord vérifier [étape 402] si le disque (2) comporte ou non une puce mémoire (60) avec des informations de session;
et dans lequel l'appareil d'entrainement de disque optique est aménagé, quand le disque (2) comporte une puce mémoire (60) avec des informations de session, pour continuer avec les étapes suivantes:
- consultation [étape 403] des informations de session dans la puce mémoire (60);
- détermination [étape 404] d'une portion de piste libre sur laquelle une écriture peut avoir lieu;
- saut [étape 405] à une position au début de la portion de piste libre déterminée;
- écriture [étape 406] des informations dans une nouvelle session;
- après avoir complété la nouvelle session, écriture [étape 407] d'informations de session mises à jour dans la puce mémoire 60.

11. Appareil d'entrainement de disque optique selon la revendication 7, capable de réaliser une opération d'écriture aléatoire sur un disque optique inscriptible (de type R).
